# EUROPEAN PATENT SPECIFICATION

(11) **EP 1 651 733 B1**
(45) Date of publication and mention of the grant of the patent: **14.02.2007**
(21) Application number: 03796008.5
(22) Date of filing: 11.11.2003
(51) Int. Cl.: C09D 183/08, C08K 5/544, C08K 5/549

(54) **COMPOSITION OF A MIXTURE OF AMINOALKYL-FUNCTIONAL AND OLIGOSILYLATED AMINOALKYL-FUNCTIONAL SILICON COMPOUNDS, ITS PREPARATION AND USE**
ZUSAMMENSETZUNG EINES GEMISCHES AMINOALKYL- UND OLIGO-SILYLIERTER AMINOALKYL-FUNKTIONELLER SILICUMVERBINDUNGEN, DEREN HERSTELLUNG UND DEREN VERWENDUNG
COMPOSITION D'UN MELANGE DE COMPOSES SILICES AMINOALKYLES FONCTIONNELS ET D'OLIGOALKYLES FONCTIONNELS ET PREPARATION ET UTILISATION DE CELLE-CI

(30) Priority: 30.07.2003 DE 10335178
(43) Date of publication of application: 03.05.2006
(73) Proprietor: Degussa AG, 40474 Düsseldorf (DE)
(72) Inventor: GIESSLER, Sabine, 79618 Rheinfelden (DE); JUST, Eckhard, 79618 Rheinfelden (DE); JENKNER, Peter, 79618 Rheinfelden (DE); BURGER, Rosemarie, 79594 Inzlingen (DE); MONKIEWICZ, Jaroslaw, 79618 Rheinfelden (DE)
(86) International application number: PCT/EP2003/050814
(87) International publication number: WO 2005/014741

(56) References cited:
- EP-A- 0 716 128
- EP-A- 1 031 593
- US-A- 5 206 285
- US-A- 5 591 818

## Description

The present invention relates to a composition which comprises a mixture of aminoalkyl-functional and also oligosilylated aminoalkyl-functional, alkoxy-functional, and, if desired, hydroxy-functional silicon compounds. References below to oligosilylated aminoalkyl-functional silicon compounds are to multiply silylated, i.e., at least doubly silylated, alkylamines, the silyl groups being attached essentially to one alkyl group or to different alkyl groups of the amine via Si-C bonds.

The present invention further relates to a process for preparing such a composition and to its use, in particular as an adhesion promoter in the form of an aqueous solution.

Aminosilanes are known as water-soluble adhesion promoters; for example, as what is termed a size or primer in the glass fiber industry.

A range of further fields of application of amino-functional silanes and/or siloxanes include the following:

Their use in coating systems, in the field of corrosion protection, for biocidal modification of surfaces, in wood treatment, in the production of electrophotographic toners, as a constituent in aminosilicone fluids (US 5 077 421), as a constituent in epoxy resins [Chemical Abstracts (1991) - CA 114: 83579s], for producing organically modified glasses (EP 0 223 987 A2), as anticancer agents [Chemical Abstracts (1983) - CA 99: 133650c], for modifying surfaces of glass and glass fiber, in wastewater treatment, for pigment treatment, as a constituent in catalysts and also for preparing them (US 4 053 534), as a flocculant in adhesives and sealants or cable applications, to name but a few examples.

It is also known to use partially hydrolyzed amino-functional alkoxysilane oligomers to reduce the formation of agglomerates in inorganic powders. US 5 543 173, for instance, discloses that such formulations also include considerable quantities of alcohol.

Purely water-based compositions with polyfunctional organopolysiloxanes are also known as adhesion promoters; cf. EP 0 675 128 B1 and EPO 716 128 B1. Such polysiloxanes generally no longer carry any alkoxy groups, i.e., they are in fully hydrolyzed form. In these systems the improvement in water solubility is ascribed essentially to the salts of the amino-functional groups.

Cationic organosilane polycondensation products in alcoholic solution are known, for example, from US 5 591 818. Here, for the preparation, the hydrogen salts of exclusively monosilylated alkylamines are used.

Oligosilylated alkylamines, such as bis(trialkoxysilylalkyl)amine or tris(3-triethoxysilylpropyl)amine, or mixtures thereof are of only low solubility in water, even with the addition of acid. Such solutions, moreover, are generally not stable for long. They tend to form gels and/or particles, which on application can lead to increased nozzle blockage and hence to a production stoppage and longer downtimes.

EP 1 031 593 A2 refers to oligosilylated aminoalkyl-functional silicon compounds as "bis products", such as bis-AMMO, bis-AMEO, bis-cyclo-AMEO, bis-DAMO, bis-TRIAMO. EP 1 031 593 A2 accordingly discloses a substantially alcohol-free composition composed of a mixture of water-soluble amino-functional silicon compounds and of oligosilylated amino-functional, alkoxy-free silicon compounds, water, and, if desired, an acid, the fraction of monosilylated amino-functional groups being much higher here than that of oligosilylated amino-functional groups. The preparation of said composition is carried out using water in excess, so that the alkoxy groups are almost completely hydrolyzed - that is, particularly reactive silanol groups are present and the siloxanes present accordingly in the aqueous composition do not carry alkoxy groups. In addition, EP 1 031 593 A2 reports that with a weight ratio of monosilylated alkylamines a to oligosilylated alkylamines b such that a/b < 1 gelling or very severe clouding occurs and so may prevent a particularly advantageous application.

Efforts are constantly being made to achieve further improvement in the product properties, application properties, and processing properties of aminosilane and/or aminosiloxane systems.

It is an object of the invention to provide a water-soluble composition based on aminosilanes for formulating a water-soluble adhesion promoter, the quotient of the ratio of monosilylated aminoalkyl groups to oligosilylated aminoalkyl groups of the silicon compounds present in the composition being less than 1.

This object is achieved in accordance with the invention as certified in the claims.

It has surprisingly been found that a gel-free and particle-free, pourable, generally clear, largely storage-stable, and water-soluble composition comprising a mixture of aminoalkyl-functional and also oligosilylated aminoalkyl-functional, alkoxy-functional, and, if desired, hydroxy-functional silicon compounds is obtained simply and economically if
(A) at least one aminoalkylalkoxysilane of the general formula I

   NH₂[(CH₂)₂NH]ₓ(CH₂)₃Si(OR)₃ (I),

   in which x is 0, 1 or 2, groups R are identical or different and R is a hydrogen atom or a linear or branched alkyl group having 1 to 4 carbon atoms,
   and/or at least one cycloaminoalkylalkoxysilane of the general formula II 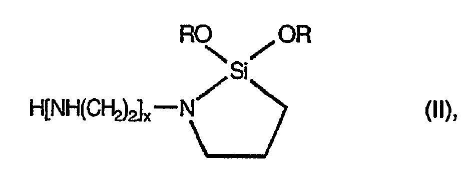 in which x is 0, 1 or 2, groups R are identical or different and R is a hydrogen atom or a linear or branched alkyl group having 1 to 4 carbon atoms,
   and
(B) at least one bis-silylated alkylamine of the general formula III

   (RO)₃Si(CH₂)₃[NH(CH₂)₂]_{y}NH[(CH₂)₂NH]₂(CH₂)₃Si(OR)₃ (III),

   in which y and z are 0, 1 or 2 and are identical or different, groups R are identical or different and R is a hydrogen atom or a linear or branched alkyl group having 1 to 4 carbon atoms,
   and/or at least one tris-silylated alkylamine of the general formula IV

   N[(CH₂)₃Si(OR)₃]₃ (IV),

   in which groups R are identical or different and R is a hydrogen atom or a linear or branched alkyl group having 1 to 4 carbon atoms,
and also, if desired, partial condensation products based on compounds as per (A) and also (B), which in each case are to be included in the abovementioned compounds as per (A) and (B),
are mixed in a silane materials weight ratio (A):(B) ≤ 0.5, appropriately an alcohol corresponding to the alkoxysilanes used is added as solvent and/or diluent, preferably more than 20% by weight of alcohol, based on the total amount of materials as per (A) and (B), additionally an organic or inorganic acid is used, the degree of neutralization of the monosilylated aminoalkyl and oligosilylated aminoalkyl groups being set appropriately at from 80 to 160%, the alkoxysilanes used are purposively partially hydrolyzed by adding water, using in total from 0.6 to 1.4 mol, preferably from 0.8 to 1.2 mol, of water per mole of Si in the silanes used here, and the hydrolyzate is condensed and cocondensed, forming corresponding organosiloxanes as condensates and/or cocondensates of the silicon compounds used here.

The present invention accordingly provides a composition comprising a mixture of aminoalkyl-functional and also oligosilylated aminoalkyl-functional, alkoxy-functional and, if desired, hydroxy-functional silicon compounds,
wherein
at least one silicon compound of the mixture of aminoalkyl-functional and also oligosilylated aminoalkyl-functional, alkoxy-functional and, if desired, hydroxy-functional silicon compounds that is present in the composition is
a product from the reaction of
(A) at least one aminoalkylalkoxysilane of the general formula I

   NH₂[(CH₂)₂NH]ₓ(CH₂)₃Si(OR)₃ (I),

   in which x is 0, 1 or 2, groups R are identical or different and R is a hydrogen atom or a linear or branched alkyl group having 1 to 4 carbon atoms,
   and/or at least one cycloaminoalkylalkoxysilane of the general formula II 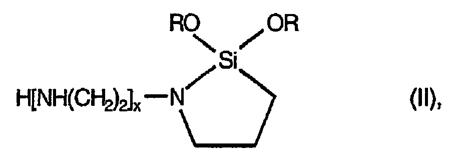 in which x is 0, 1 or 2, groups R are identical or different and R is a hydrogen atom or a linear or branched alkyl group having 1 to 4 carbon atoms,
   and
(B) at least one bis-silylated alkylamine of the general formula III

   (RO)₃Si(CH₂)₃[NH(CH₂)₂]_{y}NH[(CH₂)₂NH]_{z}(CH₂)₃Si(OR)₃ (III),

   in which y and z are 0, 1 or 2 and are identical or different, groups R are identical or different and R is a hydrogen atom or a linear or branched alkyl group having 1 to 4 carbon atoms,
   and/or at least one tris-silylated alkylamine of the general formula IV

   N[(CH₂)₃Si(OR)₃]₃ (IV),

   in which groups R are identical or different and R is a hydrogen atom or
   a linear or branched alkyl group having 1 to 4 carbon atoms,
   and/or of a reaction product of at least two alkylamines as per formula III
   and/or IV
and
the quotient of the weight ratio of the aminoalkyl compounds used as per (A) to the aminoalkyl compounds used as per (B) is less than or equal to 0.5.

The composition of the invention suitably contains from 25 to 99.99% by weight of alcohol, preferably from 30 to 80% by weight, more preferably from 40 to 70% by weight, and in particular ≥ 37% by weight of alcohol, based on the overall composition. Compositions of the invention having an alcohol content of less than 25% by weight are generally of high viscosity or solid. Preference is also given here to the alcohol which corresponds to the alkoxy group present in the silicon compounds. The composition of the invention advantageously comprises methanol, ethanol or isopropanol.

The composition of the invention also preferably contains an organic or inorganic acid, the degree of neutralization of the aminoalkyl groups and oligosilylated aminoalkyl groups being suitably from 80 to 160%, preferably from 90 to 150%, more preferably from 95 to 140%, and very preferably from 100 to 130%, based on the amine number. The amine number can generally be determined in accordance with DIN 32 625 (potentiographic titration with HCI).

The acid used in accordance with the invention is preferably an organic or inorganic acid, especially acetic acid or formic acid, with the aminoalkyl-functional and oligosilylated aminoalkyl-functional silicon compounds being present at least proportionally as a cationic amine mixture, as understood chemically, in the composition of the invention.

The pH of a composition of the invention is preferably in the range from 2.5 to 6.5, more preferably between 3 and 5.5, and in particular between 3.5 and 5.0.

Compositions of the invention generally feature a viscosity of from 1 to 100 mPa s, preferably from 2 to 50 mPa s, more preferably from 4 to 25 mPa s, the viscosity being determinable in accordance, for example, with DIN 53 015.

The compositions of the invention also feature, in particular, a surprisingly good solubility in water.

The present invention further provides the process for preparing a composition of the invention, which comprises mixing
(A) at least one aminoalkylalkoxysilane of the general formula I

   NH₂[(CH₂)₂NH]ₓ(CH₂)₃Si(OR)₃ (I),

   in which x is 0, 1 or 2, groups R are identical or different and R is a hydrogen atom or a linear or branched alkyl group having 1 to 4 carbon atoms,
   and/or at least one cycloaminoalkylalkoxysilane of the general formula II 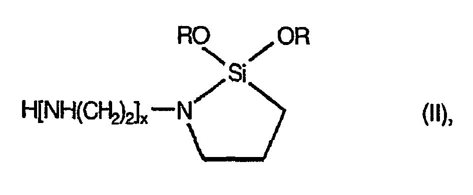 in which x is 0, 1 or 2 and R is a linear or branched alkyl group having 1 to 4 carbon atoms,
   and
(B) at least one bis-silylated alkylamine of the general formula III

   (RO)₃Si(CH₂)₃[NH(CH₂)₂]_{y}NH[(CH₂)₂NH]_{z}(CH₂)₃Si(OR)₃ (III),
in which y and z are 0, 1 or 2 and are identical or different, groups R are identical or different and R is a hydrogen atom or a linear or branched alkyl group having 1 to 4 carbon atoms,
and/or at least one tris-silylated alkylamine of the general formula IV

N[(CH₂)₃Si(OR)₃]₃ (IV),

in which groups R are identical or different and R is a hydrogen atom or a linear or branched alkyl group having 1 to 4 carbon atoms,
and/or partial condensation products based on compounds as per formula III and/or IV

in a weight ratio (A):(B) ≤ 0.5, adding an alcohol as solvent and/or diluent, adding an organic or inorganic acid, purposively partially hydrolyzing the alkoxysilanes used by adding water, using a total of from 0.6 to 1.4 mol of water per mole of silane, and condensing and cocondensing the hydrolyzate. The reaction of the invention is appropriately conducted with thorough mixing.

In the process of the invention it is preferred to use aminosilanes as per (A) and oligosilylated alkylamines as per (B) in a (A)/(B) weight ratio of from 0.001 to 0.5, more preferably from 0.01 to 0.4, and very preferably from 0.1 to 0.3.

Monosilylated amines in the present patent application mean those of the formula I and II. Oligosilylated amines mean in particular those which carry two or more silyl groups on an amino group and/or alkylamine, in accordance for example with formula III (bis-silylated) or formula IV (tris-silylated) and/or corresponding compounds in cydized form.

In the process of the invention it is preferred as aminoalkylalkoxysilanes of the general formula I to use

H₂N(CH₂)₃Si(OCH₃)₃ (AMMO),

H₂N(CH₂)₃Si(OC₂H₅)₃ (AMEO),

H₂N(CH₂)₂NH(CH₂)₃Si(OCH₃)₃ (DAMO),

H₂N(CH₂)₂NH(CH₂)₂NH(CH₂)₃Si(OCH₃)₃ (TRIAMO),

and also cyclic compounds of formula II corresponding to these.

Preferred compounds of the formula III include

(H₃CO)₃Si(CH₂)₃NH(CH₂)₃Si(OCH₃)₃ (bis-AMMO),

(H₅C₂O)₃Si(CH₂)₃NH(CH₂)₃Si(OC₂H₅)₃ (bis-AMEO),

(H₃CO)₃Si(CH₂)₃NH(CH₂)₂NH(CH₂)₂NH(CH₂)₃Si(OCH₃)₃ (bis-DAMO),

(H₃CO)₃Si(CH₂)₃NH(CH₂)₂NH(CH₂)₂NH(CH₂)₂NH(CH₂)₂NH(CH₂)₃Si(OCH₃)₃ (bis-TRIAMO),

and preferred compounds of formula IV include

N[CH₂)₃Si(OCH₃)₃]₃ (tris-AMMO),

N[CH₂)₃Si(OC₂H₅)₃]₃ (tris-AMEO).

In the present process it is likewise possible to make advantageous use of mixtures comprising compounds of the general formulae I, II, III and/or IV. Such mixtures of the invention that can be used may also include partial condensation products of said aminoalkoxysilanes. By partial condensation products or reaction products of aminoalkoxysilanes of the general formulae I, II, III and/or IV are meant, appropriately, those dimeric, trimeric, tetrameric or higher oligomeric products which generally are formed through condensation or cocondensation and/or prehydrolysis of the respective monomers with the elimination of alcohol. In corresponding condensates and cocondensates, accordingly, the starting components are linked via Si-O-Si bonds. It is also known that a ring as per formula II opens on hydrolysis or alcoholysis and the corresponding aminoalkylalkoxysilane or -silanol is obtained. Compounds of the general formula III may also be present in cyclic or bicyclic form and can be used as such in the process of the invention.

The solvent and/or diluent used with preference in the process of the invention is the corresponding alcohol to the particular aminoalkoxysilanes used. Hence methanol or ethanol are particularly preferred. Alternatively it is possible to use higher alcohols, such as isopropanol, or alcohol mixtures.

In the process of the invention it is also preferred to use an organic or inorganic acid. Use may accordingly be made advantageously of aqueous acetic acid or aqueous formic acid, with the fraction of water introduced as a result having to be added simultaneously to the amount of water to be introduced in accordance with the invention for the purposive hydrolysis of the alkoxysilanes.

In the process of the invention the reaction, particularly hydrolysis and condensation or cocondensation, is appropriately conducted at a temperature < 100°C, preferably from 10 to 80°C, more preferably from 15 to 60°C, and in particular from 20 to 50°C.

The process of the invention is generally performed by first introducing said aminoalkoxysilanes as per (A) and (B) and mixing them with the addition of alcohol, purposively adding acid and water, and subjecting the alkoxysilanes present to hydrolysis and condensation or cocondensation while monitoring the temperature and ensuring thorough mixing. In order to adjust the level of alcohol in the composition of the invention it is possible, if desired, to add alcohol or to remove it from the system by distillation.

According to chemical understanding the reaction of the invention produces essentially a mixture of amino-containing alkoxysiloxanes based on condensation products and cocondensation products originating from compounds of the general formulae I, II, III and IV and/or corresponding partial condensation products. The silicon compounds present in the composition of the invention, to give but a few examples, can be interpreted as being essentially of the formula V

NH₂[(CH₂)₂NH]ₓ(CH₂)₃Si(OR)ᵣO_{(1.5-r/2)}, (V)

in which groups R are identical or different and R is a hydrogen atom or a linear or branched alkyl group having 1 to 4 carbon atoms, x is 0, 1 or 2, and r is 0, 1 or 2,
and of the formula VI

[Si(OR)ₚO_{(1.5p/2)}](CH₂)₃[NH(CH₂)₂]_{y}NH[(CH₂)₂NH]_{z}(CH₂)₃Si(OR)_{q}O(_{1.5-q/2)}, (VI)

in which groups R are identical or different and R is a hydrogen atom or a linear or branched alkyl group having 1 to 4 carbon atoms, y and z are 0, 1 or 2 and are identical or different, and q and p are 0, 1, 2 or 3 and are identical or different, with the proviso that q+p ≤ 5,
but also as cocondensates of silicon compounds linked via -Si-O-Si- bonds, on the basis of the general formula I, II, III, IV, V and/or VI. The composition of the invention may further include, at least proportionally, monomeric aminoalkoxysilanes which may be in partially hydrolyzed form, i.e., monomeric aminoalkylalkoxysilanols.

The present invention accordingly further provides a composition obtainable by the process of the invention.

Thus compositions of the invention appropriately contain active substance, i.e., cationic amino-functional silicon compounds and/or said reaction products, at from 0.01 to 60% by weight, preferably from 0.1 to 60% by weight, more preferably from 35 to 55% by weight, and very preferably from 40 to 50% by weight, based on the composition.

The invention accordingly yields an alcoholic composition of the invention in a particularly advantageous way, particularly advantageous in being, surprisingly, obtainable and, moreover, preparable with ease and economy, which is in a pourable, storage-stable, and water-soluble form.

A composition of the invention can be used with particular advantage for preparing a substantially aqueous solution which in general is clear and can be applied directly. This is done by mixing 100 parts by weight of water with appropriately from 0.001 to 4 parts by weight, preferably from 0.01 to 3, more preferably from 0.1 to 2, and in particular from 0.2 to 1.5 parts by weight of active substance of the composition of the invention. The weight figures are based on the active substance content of the composition of the invention. In an aqueous solution of the invention, accordingly, the amount of active aminosilane or aminosiloxane substance is preferably ≤ 4% by weight, based on the solution.

An aqueous solution of the invention may further include alcohol, such as methanol, ethanol, isopropanol or mixtures thereof, with such an alcohol fraction in the solution generally being attributable to the use of an alcoholic composition of the invention.

An aqueous solution of the invention with a strength, for example, of 2% by weight appropriately has a pH of from 4 to 9. The pH can be set or adjusted by adding an acid or base, acetic acid or ammonia, for example. Aqueous solutions of the invention can generally be applied advantageously for up to 4 weeks.

The present invention hence also provides an aqueous solution obtainable as claimed in claim 12.

Compositions of the invention, including alcoholic compositions, and aqueous dilutions formed from them, i.e., aqueous solutions of the invention, are therefore capable of outstanding application.

The present invention also provides for the use of a composition of the invention in alcoholic solution, especially in ethanolic solution. It is further advantageous to use a composition of the invention or aqueous solution of the invention having an active substance content of from 0.001 to 4% by weight. This application relates for example to sizes which are utilized in glass fiber processing.

The compositions of the invention may further be added at from 0.001 to 4% by weight active substance to an aqueous size solution, in which they act as adhesion promoters, in order to make the glass fiber thus sized compatible with a polymer, e.g., glass fiber-reinforced nylon for applications in the automotive sector.

Another advantageous application is the use of a composition of the invention in sealants. In this case it is possible with advantage to add about 1% by weight of active substance to the sealant formulation as an additive. This allows the adhesion of the sealant to be improved.

Compositions of the invention and aqueous solutions of the invention are used outstandingly, thus, as adhesion promoters, as a constituent in coating systems, as a constituent of inks and paints, as a constituent in epoxy resins and also phenolic resins, as a constituent in organically modified glasses, for modifying glass surfaces and mineral surfaces, and also glass fiber surfaces and mineral fiber surfaces, as a constituent in plastics, preferably in polyamides, polybutylene terephthalate (PBT), polyurethane (PU), epoxy resins, melamine, for the glass fiber reinforcement of plastics, as a constituent in glass fiber sizes, and for treating fillers and pigments or in adhesives and sealants. Accordingly it is possible, by applying a composition of the invention and/or an aqueous solution of the invention, to achieve further improvement of the properties, such as tensile strength and flexural strength, in products reinforced accordingly.

On application, accordingly, compositions of the invention and their aqueous solutions are also distinguished by an outstanding adhesion promotion effect.

In accordance with the present invention it is now also possible, in an advantageous way, to obtain compositions and corresponding aqueous solutions based on said aminoalkoxysilanes, the quotient of the weight ratio of all of the aminoalkyl groups as per (A) present in the system to all of the oligosilylated aminoalkyl groups as per (B) being less than or equal to 0.5.

The present invention is illustrated by the examples below.

### Example 1

### Apparatus:

500 ml stirred reactor, internal thermometer, metering device, heating bath

### Reactants:

Aminoalkoxysilane mixture containing 63% by weight cyclobis(3-triethoxysilylpropyl)amine, 30% by weight bis(3-triethoxysilylpropyl)amine, 2% by weight aminopropyltriethoxysilane, 3% by weight tris(3-triethoxysilylpropyl)amine, and 2% by weight siloxanes, i.e., partial condensation products, the silane mixture being characterized by a nitrogen content of 3.2% by weight and an amine number of 2.6% by weight, ethanol (99% by weight, denatured with petroleum ether or methyl ethyl ketone), fully demineralized water, and glacial acetic acid (in 100% form).

In the stirred apparatus 260.5 g of ethanol were admixed to 200 g of the aminosilane mixture and over the course of 10 minutes 29.3 g of glacial acetic acid were added at a rate such that the temperature did not exceed 50°C. Then 10.2 g of fully demineralized water were metered in over the course of 10 minutes at a liquid-phase temperature of 50°C. The mixture was stirred at 50°C for 4 hours for subsequent reaction.

The product obtained had a storage stability of approximately twelve months, a pH of between 4 and 5, a Gardner color number of approximately 8, and an amine number of approximately 1.1% by weight. The turbidity of the product was 3.7 TU/F (DIN/EN27027). The flash point was around 13°C. The total nitrogen content was approximately 1.3% by weight.

Water was added to the resulting product, in addition, to prepare an aqueous solution having an active substance content of 2% by weight. The pH could be varied from 4 to 9 by adding additional acetic acid or ammonia. An aqueous solution prepared in this way was stable for 1 month.

### Example 2

### Apparatus:

500 ml stirred reactor, internal thermometer, metering device, heating bath

### Reactants:

81% by weight bis(3 triethoxysilylpropyl)amine, 6% by weight 3-triethoxysilylpropylamine, 0.2% by weight cyclo-(3-triethoxysilylpropyl)amine, 2% by weight cyclobis(3-triethoxysilyipropyl)amine, 2% by weight tris(3-triethoxysilylpropyl)amine, and 8.8% by weight siloxanes, characterized by a nitrogen content of 3.21% by weight and an amine number of 2.55% by weight. Further materials used were fully demineralized water and acetic acid.

In the stirred apparatus 200 g of the ethanolic silane mixture were diluted with a further 148.6 g of ethanol. 17.3 g of acetic acid were added over the course of 10 minutes, with stirring, at a rate such that the temperature did not exceed 50°C. Then 6.2 g of fully demineralized water were metered in over the course of 10 minutes at a liquid-phase temperature of 50°C. The mixture was stirred at 50°C for 4 hours for subsequent reaction. The technical data of the resulting composition are listed in the table below. The storage stability of the composition obtained has so far been more than twelve months.

| **Technical data** | | **Determination method** |
|---|---|---|
| Flash point | > 13°C | DIN 51 755 |
| Density | 0.884 g/cm³ | DIN 51 757 |
| Viscosity | 14.2 mPa·s | DIN 53 015 |
| Gardner color no. | 8 | ISO 4630 |
| pH | 4.5 | DIN 19 268 (20°C, 1000 g/l) |

### Comparative Example

In this case a stirred reactor comparable to that of Example 1 was used, with internal thermometer, metering device and heating bath.

A silane mixture was used which was composed of 42% by weight of aminopropyltriethoxysilane and 27% by weight bis(3-triethoxysilylpropyl)amine, 27% by weight cyclobis(3-triethoxysilylpropyl)amine, 2% by weight trisaminopropyltriethoxysilane, and approximately 2% by weight siloxane, characterized by a nitrogen content of 4.6% by weight.

In the stirred apparatus first 200 g of the silane mixture were diluted with 80 g of ethanol. Then, with stirring, 65.2 g of acetic acid were added over the course of 10 minutes, during which the temperature did not exceed 50°C. Subsequently 12.6 g of fully demineralized water were metered in together with 20 g of ethanol over the course of 60 minutes at a base temperature of 50°C. The resulting mixture was subsequently stirred at 50°C over 4 hours for subsequent reaction. The product was then diluted with 122 g of ethanol.

The product prepared in this case gels after a storage time of just one month approximately, at room temperature.

### Testing:

Compositions in accordance with Examples 1 and 2 were tested on the one hand in a glass fiber-reinforced polyamide 6,6 and on the other hand in a glass fiber-reinforced epoxy resin.

For the epoxy resin experiments 0.5% by weight active substance content in the aqueous size was used. The adhesion promoters, made up in aqueous solution, were applied to the glass fiber during the spinning process. Then unidirectional prepregs were produced on a winding machine by dipping the glass fibers in the resin. 10 layers of prepreg were then processed to laminates on a hydraulic sheet press.

The transverse tensile strength of the laminates was determined, both dry and after moisture exposure. This was done using a Zwick 1456 testing machine. To investigate the effect of moisture the test specimens were boiled in water for 2 hours prior to the determination of the transverse tensile strength, and then were dabbed off with filter paper (DIN 53 499).

The laminates produced using the compositions of Examples 1 and 2 gave transverse tensile strengths of 54.9 MPa dry and 45.8 MPa following moisture exposure.

By contrast, comparative laminates produced with 3-aminopropyltriethoxysilane gave figures of 53.9 MPa and 45.3 MPa.

In the course of further measurements on epoxy laminates, in which the flexural strength was measured in accordance with ISO 178 using the Zwick Z010 machine, it was also evident that the compositions of Examples 1 and 2 had distinct advantages. Within the laminate, the sample from the examples brought about a strength of 648 MPa, while the comparative sample with 3-aminopropyltriethoxysilane had a strength of only 604 MPa.

For the polyamide experiments 1% by weight active substance content, based on the Si content of the composition, in the glass fiber size was used. The glass fiber was subsequently processed with PA 6.6 in a twin-screw extruder.

In the polyamide experiments the glass fibers were again treated with adhesion promoter during the spinning operation. Short-fiber-reinforced polyamide composites were then produced by compounding on a twin-screw extruder. These composites were tested for their tensile strength (ISO 527-2/1A/5, Zwick testing machine 1456) and flexural impact strength (ISO 179/1eU, Charpy impact strength with pendulum impact unit PSW 4J). The elasticity modulus from the tensile strength measurement was found to be 8690 MPa for the composition of Example 1 and 8527 MPa for the comparative experiment with 3-aminopropyltriethoxysilane. For the impact strength, accordingly, values of 58.6 kJ/m² and 58.4 kJ/m² (comparative experiment) were measured.

## Claims

1. A composition comprising a mixture of aminoalkyl-functional and also oligosilylated aminoalkyl-functional, alkoxy-functional and, if desired, hydroxy-functional silicon compounds,
wherein
at least one silicon compound of the mixture of aminoalkyl-functional and also oligosilylated aminoalkyl-functional, alkoxy-functional and, if desired, hydroxy-functional silicon compounds that is present in the composition is
a product from the reaction of
(A) at least one aminoalkylalkoxysilane of the general formula I
NH₂[(CH₂)₂NH]ₓ(CH₂)₃Si(OR)₃ (I),
in which x is 0, 1 or 2, groups R are identical or different and R is a hydrogen atom or a linear or branched alkyl group having 1 to 4 carbon atoms,
and/or at least one cycloaminoalkylalkoxysilane of the general formula II 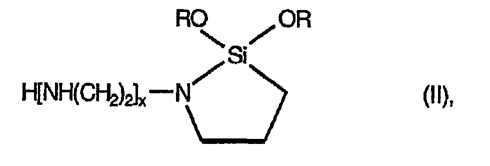 in which x is 0, 1 or 2, groups R are identical or different and R is a hydrogen atom or a linear or branched alkyl group having 1 to 4 carbon atoms,
and
(B) at least one bis-silylated alkylamine of the general formula III
(RO)₃Si(CH₂)₃[NH(CH₂)₂]_{y}NH[(CH₂)₂NH]_{z}(CH₂)₃Si(OR)₃ (III),
in which y and z are 0, 1 or 2 and are identical or different and R is a linear or branched alkyl group having 1 to 4 carbon atoms,
and/or at least one tris-silylated alkylamine of the general formula IV
N[(CH₂)₃Si(OR)₃]₃ (IV),
in which groups R are identical or different and R is a hydrogen atom or a linear or branched alkyl group having 1 to 4 carbon atoms,
or a reaction product of at least two silylated alkylamines as per formula III and/or IV,
and
the quotient of the weight ratio of the aminoalkyl compounds used as per (A) to the oligosilylated aminoalkyl compounds used as per (B) is less than or equal to 0.5.

2. A composition as claimed in claim 1, **characterized by** an alcohol content of from 25 to 99.99% by weight.

3. A composition as claimed in claim 1 or 2, **characterized by** the presence therein of acid.

4. A composition as claimed in claim 3, **characterized by** a degree of neutralization of the aminoalkyl and oligosilylated aminoalkyl groups of from 80 to 160%, based on the amine number.

5. A composition as daimed in any of claims 1 to 4, **characterized by** a reaction product content of from 0.01 to 60% by weight.

6. A composition as claimed in any of claims 1 to 5, **characterized by** the presence therein of alcohol.

7. A process for preparing a composition as claimed in any of claims 1 to 6, which comprises mixing
(A) at least one aminoalkylalkoxysilane of the general formula I
NH₂[(CH₂)₂NH]ₓ(CH₂)₃Si(OR)₃ (I),
in which x is 0, 1 or 2, groups R are identical or different and R is a hydrogen atom or a linear or branched alkyl group having 1 to 4 carbon atoms,
and/or at least one cycloaminoalkylalkoxysilane of the general formula II 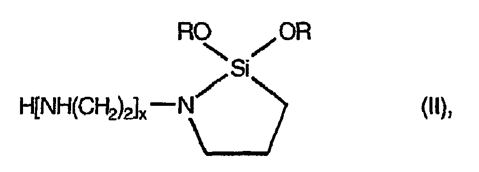 in which x is 0, 1 or 2, groups R are identical or different and R is a hydrogen atom or a linear or branched alkyl group having 1 to 4 carbon atoms,
and
(B) at least one bis-silylated alkylamine of the general formula III
(RO)₃Si(CH₂)₃[NH(CH₂)₂]_{y}NH[(CH₂)₂NH]_{z}(CH₂)₃Si(OR)₃ (III),
in which y and z are 0, 1 or 2 and are identical or different, groups R are identical or different and R is a hydrogen atom or a linear or branched alkyl group having 1 to 4 carbon atoms,
and/or at least one tris-silylated alkylamine of the general formula IV
N[(CH₂)₃Si(OR)₃]₃ (IV),
in which groups R are identical or different and R is a hydrogen atom or a linear or branched alkyl group having 1 to 4 carbon atoms,
in a weight ratio (A)/(B) ≤ 0.5, adding an alcohol as solvent and/or diluent, adding an organic or inorganic acid, purposively partially hydrolyzing the alkoxysilanes used by adding water, using a total of from 0.6 to 1.4 mol of water per mole of silane, and condensing and cocondensing the hydrolyzate.

8. A process as claimed in claim 7, wherein aminosilanes as per (A) and oligosilylated alkylamines as per (B) are used in an (A)/(B) weight ratio of from 0.001 to 0.5.

9. A process as claimed in claim 7 or 8, wherein the reaction is conducted at a temperature < 100°C.

10. A process as claimed in any of claims 7 to 9, wherein acetic acid or formic acid is used as acid.

11. A composition obtainable as claimed in any of claims 7 to 10.

12. The use of a composition as claimed in any of claims 1 to 11 for preparing a substantially aqueous solution by mixing 100 parts by weight of water and from 0.001 to 4 parts by weight of active substance of the composition.

13. An aqueous solution obtainable as claimed in claim 12.

14. The use of a composition as claimed in any of claims 1 to 6, of a composition obtained as claimed in any of claims 7 to 11 or of an aqueous solution as claimed in claim 12 or 13 as an adhesion promoter, as a constituent in coating systems, as a constituent in inks and paints, as a constituent in epoxy resins and phenolic resins, as a constituent in plastics, as a constituent in organically modified glasses, for modifying glass fiber surfaces and mineral fiber surfaces, for the glass fiber reinforcement of plastics, as a constituent in sizes, and for treating fillers and pigments, and also as an addition to adhesives and sealants.

## Patentansprüche

1. Zusammensetzung, die ein Gemisch aminoalkyl- sowie oligo-silylierter-aminoalkyl-, alkoxy- und gegebenenfalls hydroxy-funktioneller Siliciumverbindungen enthält,
wobei
mindestens eine Siliciumverbindung des in der Zusammensetzung enthaltenen Gemisches aminoalkyl- sowie oligo-silylierter-aminoalkyl-, alkoxy- und gegebenenfalls hydroxy-funktioneller Siliciumverbindungen
ein Reaktionsprodukt aus der Umsetzung von
(A) mindestens einem Aminoalkylalkoxysilan der allgemeinen Formel I
NH₂[(CH₂)₂NH]ₓ(CH₂)₃Si(OR)₃ (I),
worin x gleich 0, 1 oder 2 ist, Gruppen R gleich oder verschieden sind und R für ein Wasserstoffatom oder für eine lineare oder verzweigte Alkyl-Gruppe mit 1 bis 4 C-Atomen steht,
und/oder mindestens einem Cyclo-Aminoalkylalkoxysilan der allgemeinen Formel II 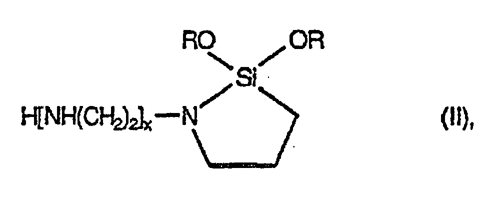 worin x gleich 0, 1 oder 2 ist, Gruppen R gleich oder verschieden sind und R für ein Wasserstoffatom oder für eine lineare oder verzweigte Alkyl-Gruppe mit 1 bis 4 C-Atomen steht, und
(B) mindestens einem bis-silylierten Alkylamin der allgemeinen Formel III
(RO)₃Si(CH₂)₃[NH(CH₂)₂]_{y}NH[(CH₂)₂NH]_{z}(CH₂)₃Si(OR)₃ (III),
worin y und z gleich 0, 1 oder 2 und gleich oder verschieden sind und R für eine lineare oder verzweigte Alkyl-Gruppe mit 1 bis 4 C-Atomen steht,
und/oder mindestens einem tris-silylierten Alkylamin der allgemeinen Formel IV
N[(CH₂)₃Si(OR)₃]₃ (IV),
worin Gruppen R gleich oder verschieden sind und R für ein Wasserstoffatom oder für eine lineare oder verzweigte Alkyl-Gruppe mit 1 bis 4 C-Atomen steht,
oder ein Reaktionsprodukt aus mindestens zwei silylierten Alkylaminen gemäß Formel III und/oder IV darstellt und
der Quotient aus dem Gewichtsverhältnis der eingesetzten Aminoalkylverbindungen gemäß (A) zu den eingesetzten oligo-silylierten Aminoalkylverbindungen gemäß (B) kleiner gleich 0,5 ist.

2. Zusammensetzung nach Anspruch 1, **gekennzeichnet durch** einen Gehalt an Alkohol von 25 bis 99,99 Gew.-%.

3. Zusammensetzung nach Anspruch 1 oder 2, **gekennzeichnet durch** einen Gehalt an Säure.

4. Zusammensetzung nach Anspruch 3, **gekennzeichnet durch** einen Neutralisationsgrad der Aminoalkyl- und oligo-silylierten Aminoalkyl-Gruppen von 80 bis 160 %, bezogen auf die Aminzahl.

5. Zusammensetzung nach einem der Ansprüche 1 bis 4, **gekennzeichnet durch** einen Gehalt an Reaktionsprodukt von 0,01 bis 60 Gew.-%.

6. Zusammensetzung nach einem der Ansprüche 1 bis 5, **gekennzeichnet durch** einen Gehalt an Alkohol.

7. Verfahren zur Herstellung einer Zusammensetzung nach einem der Ansprüche 1 bis 6, wobei man
(A) mindestens ein Aminoalkylalkoxysilan der allgemeinen Formel I
NH₂[(CH₂)₂NH]ₓ(CH₂)₃Si(OR)₃ (I),
worin x gleich 0, 1 oder 2 ist, Gruppen R gleich oder verschieden sind und R für ein Wasserstoffatom oder für eine lineare oder verzweigte Alkyl-Gruppe mit 1 bis 4 C-Atomen steht,
und/oder mindestens ein Cyclo-Aminoalkylalkoxysilan der allgemeinen Formel II 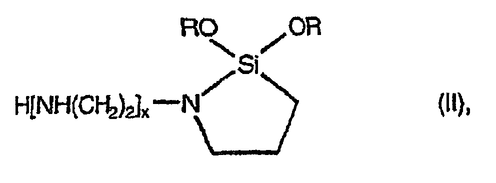 worin x gleich 0, 1 oder 2 ist, Gruppen R gleich oder verschieden sind und R für ein Wasserstoffatom oder für eine lineare oder verzweigte Alkyl-Gruppe mit 1 bis 4 C-Atomen steht,
und
(B) mindestens ein bis-silyliertes Alkylamin der allgemeinen Formel III
(RO)₃Si(CH₂)₃[NH(CH₂)₂]_{y}NH[(CH₂)₂NH]_{z}(CH₂)₃Si(OR)₃ (III),
worin y und z gleich 0, 1 oder 2 und gleich oder verschieden sind, Gruppen R gleich oder verschieden sind und R für ein Wasserstoffatom oder für eine lineare oder verzweigte Alkyl-Gruppe mit 1 bis 4 C-Atomen steht,
und/oder mindestens ein tris-silyliertes Alkylamin der allgemeinen Formel IV
N[(CH₂)₃Si(OR)₃]₃ (IV),
worin Gruppen R gleich oder verschieden sind und R für ein Wasserstoffatom oder für eine lineare oder verzweigte Alkyl-Gruppe mit 1 bis 4 C-Atomen steht, in einem Gewichtsverhältnis (A)/(B) ≤ 0,5 mischt, einen Alkohol als Löse- bzw. Verdünnungsmittel zusetzt, eine organische oder anorganische Säure zugibt, die eingesetzten Alkoxysilane durch Zugabe von Wasser gezielt partiell hydrolysiert, wobei man in Summe 0,6 bis 1,4 Mol Wasser pro Mol Silan einsetzt, und das Hydrolysat kondensieren sowie cokondensieren lässt.

8. Verfahren nach Anspruch 7, **dadurch gekennzeichnet, dass** man Aminosilane gemäß (A) und oligo-silylierte Alkylamine gemäß (B) in einem Gewichtsverhältnis (A)/(B) von 0,001 bis 0,5 einsetzt.

9. Verfahren nach Anspruch 7 oder 8, **dadurch gekennzeichnet, dass** man die Umsetzung bei einer Temperatur < 100°C durchführt.

10. Verfahren nach einem der Ansprüche 7 bis 9, **dadurch gekennzeichnet, dass** man als Säure Essigsäure oder Ameisensäure einsetzt.

11. Zusammensetzung erhältlich nach einem der Ansprüche 7 bis 10.

12. Verwendung einer Zusammensetzung nach einem der Ansprüche 1 bis 11 für die Herstellung einer im Wesentlichen wässrigen Lösung durch Mischen von 100 Gewichtsteilen Wasser und 0,001 bis 4 Gewichtsteilen Wirkstoff der Zusammensetzung.

13. Wässrige Lösung erhältlich gemäß Anspruch 12.

14. Verwendung einer Zusammensetzung nach den Ansprüchen 1 bis 6, einer Zusammensetzung erhalten nach den Ansprüchen 7 bis 11 sowie einer wässrigen Lösung nach Anspruch 12 oder 13 als Haftvermittler, als Bestandteil in Beschichtungssystemen, als Bestandteil in Farben und Lacken, als Bestandteil in Epoxid- sowie Phenolharzen, als Bestandteil in Kunststoffen, als Bestandteil in organisch modifizierten Gläsern, für die Modifizierung von Glas- und Mineralfaseroberflächen, für die Glasfaserverstärkung von Kunststoffen, als Bestandteil in Schlichten und für die Behandlung von Füllstoffen und Pigmenten sowie als Zusatz in Kleb- und Dichtmassen.

## Revendications

1. Composition comprenant un mélange de composés siliciés à fonction aminoalkyle ainsi qu'à fonction aminoalkyle oligosilylé, à fonction alcoxy et, si on le souhaite, à fonction hydroxy,
dans laquelle
au moins un composé silicié du mélange de composés siliciés à fonction aminoalkyle ainsi qu'à fonction aminoalkyle oligosilylé, à fonction alcoxy et, si on le souhaite, à fonction hydroxy, qui est présent dans la composition, est
un produit de la réaction de
(A) au moins un aminoalkylalcoxysilane de formule générale I
NH₂[(CH₂)₂NH]ₓ(CH₂)₃Si(OR)₃ (I),
dans laquelle x vaut 0, 1 ou 2, les groupes R sont identiques ou différents, et R est un atome d'hydrogène ou un groupe alkyle linéaire ou ramifié renfermant de 1 à 4 atomes de carbone,
et/ou au moins un cycloaminoalkyalcoxysilane de formule générale II 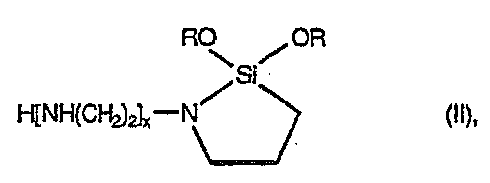 dans laquelle x vaut 0, 1 ou 2, les groupes R sont identiques ou différents, et R est un atome d'hydrogène ou un groupe alkyle linéaire ou ramifié renfermant de 1 à 4 atomes de carbone,
et
(B) au moins une alkylamine bis-silylée de formule générale (III)
(RO)₃Si(CH₂)₃[NH(CH₂)₂]_{y}NH[(CH₂)₂NH]_{z}(CH₂)₃Si(OR)₃ (III),
dans laquelle y et z valent 0, 1 ou 2 et sont identiques ou différents, et R est un groupe alkyle linéaire ou ramifié renfermant de 1 à 4 atomes de carbone,
et/ou au moins une alkylamine tris-silylée de formule générale IV
N[(CH₂)₃Si(OR)₃]₃ (IV),
dans laquelle les groupes R sont identiques ou différents, et R est un atome d'hydrogène ou un groupe alkyle linéaire ou ramifié renfermant de 1 à 4 atomes de carbone,
ou un produit de réaction d'au moins deux alkylamines silylées comme pour les formules III et/ou IV,
et
le quotient du rapport pondéral entre les composés aminoalkyle utilisés selon (A) et les composés aminoalkyle oligosilylés utilisés selon (B) est inférieur ou égal à 0,5.

2. Composition selon la revendication 1, **caractérisée par** une teneur en alcool de 25 à 99,99 % en poids.

3. Composition selon la revendication 1 ou 2, **caractérisée par** la présence d'acide dans celle-ci.

4. Composition selon la revendication 3, **caractérisée par** un degré de neutralisation des groupes aminoalkyle et aminoalkyle oligosilylés de 80 à 160 %, par rapport à l'indice d'amine.

5. Composition selon l'une quelconque des revendications 1 à 4, **caractérisée par** une teneur en produit de réaction de 0,01 à 60 % en poids.

6. Composition selon l'une quelconque des revendications 1 à 5, **caractérisée par** la présence d'alcool dans celle-ci.

7. Procédé de préparation d'une composition selon l'une quelconque des revendications 1 à 6, comprenant le mélangeage de
(A) au moins un aminoalkylalcoxysilane de formule générale I
NH₂[(CH₂)₂NH]ₓ(CH₂)₃Si(OR)₃ (I),
dans laquelle x vaut 0, 1 ou 2, les groupes R sont identiques ou différents, et R est un atome d'hydrogène ou un groupe alkyle linéaire ou ramifié renfermant de 1 à 4 atomes de carbone,
et/ou au moins un cycloaminoalkyalcoxysilane de formule générale II 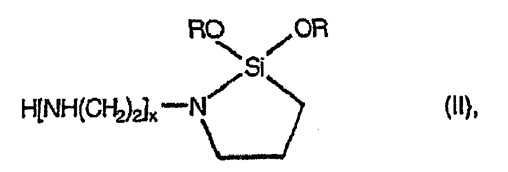 dans laquelle x vaut 0, 1 ou 2, les groupes R sont identiques ou différents, et R est un atome d'hydrogène ou un groupe alkyle linéaire ou ramifié renfermant de 1 à 4 atomes de carbone,
et
(B) au moins une alkylamine bis-silylée de formule générale (III)
(RO)₃Si(CH₂)₃[NH(CH₂)₂]_{y}NH[(CH₂)₂NH]_{z}(CH₂)₃Si(OR)₃ (III),
dans laquelle y et z valent 0, 1 ou 2 et sont identiques ou différents, les groupes R sont identiques ou différents et R est un atome d'hydrogène ou un groupe alkyle linéaire ou ramifié renfermant de 1 à 4 atomes de carbone,
et/ou au moins une alkylamine tris-silylée de formule générale IV
N[(CH₂)₃Si(OR)₃]₃ (IV),
dans laquelle les groupes R sont identiques ou différents, et R est un atome d'hydrogène ou un groupe alkyle linéaire ou ramifié renfermant de 1 à 4 atomes de carbone,
en un rapport pondéral (A) / (B) ≤ 0,5, l'addition d'un alcool en tant que solvant et/ou diluant, l'addition d'un acide organique ou inorganique, l'hydrolyse partielle délibérée des alcoxysilanes utilisés en ajoutant de l'eau, l'utilisation d'un total de 0,6 à 1,4 mole d'eau par mole de silane, et la condensation et la co-condensation de l'hydrolysat.

8. Procédé selon la revendication 7, dans lequel des aminosilanes selon (A) et des alkylamines oligosilylés selon (B) sont utilisés en un rapport pondéral (A) / (B) de 0,001 à 0,5.

9. Procédé selon la revendication 7 ou 8, dans lequel la réaction est réalisée à une température < 100°C.

10. Procédé selon l'une quelconque des revendications 7 à 9, dans lequel on utilise de l'acide acétique ou de l'acide formique en tant qu'acide.

11. Composition pouvant être obtenue selon l'une quelconque des revendication 7 à 10.

12. Utilisation d'une composition selon l'une quelconque des revendications 1 à 11 pour la préparation d'une solution substantiellement aqueuse en mélangeant 100 parties en poids d'eau et de 0,001 à 4 parties en poids de substance active de la composition.

13. Solution aqueuse pouvant être obtenue selon la revendication 12.

14. Utilisation d'une composition selon l'une quelconque des revendications 1 à 6, d'une composition obtenue selon l'une quelconque des revendications 7 à 11 ou d'une solution aqueuse selon l'une quelconque des revendications 12 ou 13 en tant que promoteur d'adhésion, en tant que constituant dans des systèmes de revêtement, en tant que constituant dans des encres et des peintures, en tant que constituant dans des résines époxy et des résines phénoliques, en tant que constituant dans des matières plastiques, en tant que constituant dans des verres organiquement modifiés, pour la modification de surfaces de fibres de verre et de surfaces de fibres minérales, pour le renforcement de matières plastiques par des fibres de verre, en tant que constituant dans des ensimages, et pour le traitement de charges et de pigments, ainsi qu'en tant qu'addition à des adhésifs et des mastics.
